# EUROPEAN PATENT SPECIFICATION

(11) **EP 0 246 108 B1**
(45) Date of publication and mention of the grant of the patent: **24.03.1993**
(21) Application number: 87304312.9
(22) Date of filing: 15.05.1987
(51) Int. Cl.: G02B 23/14, G02B 23/16, G02B 7/02

(54) **An optical device**
Optische Vorrichtung
Dispositif optique

(30) Priority: 16.05.1986 GB 8612035
(43) Date of publication of application: 19.11.1987
(73) Proprietor: Nathan, William Penton, Guildford Surrey GU3 3NQ (GB)
(72) Inventor: Nathan, William Penton, Guildford Surrey GU3 3NQ (GB)
(74) Representative: Tolfree, Roger Keith

(56) References cited:
- CH-A- 92 172
- CH-A- 538 664
- DE-A- 2 259 913
- GB-A- 343 228
- GB-A- 360 306
- GB-A- 2 040 067
- GB-A- 2 141 260
- US-A- 3 706 848

## Description

This invention relates to an optical device. It arose in relation to the design of gun sights but could possibly be applicable to other areas of optics. In this specification the terms "optical" and "optics" are to be construed as including visible, infra-red, ultra-violet and any other lens and/or mirror systems.

In operation of a gun sight the gunner sometimes needs to view subjects outside the field of view of the sight and, in order to do so, needs to move the sight so as to change its field of view. This either involves moving the gun, which may be undesirable because such movement can be detected by others; or involves moving the sight relative to the gun. Moving the sight relative to the gun introduces the problem of subsequently needing to re-align the sight with the gun.

Two known devices of this type are shown in US Patent No. 3,706,848 and German Patent Application No. 2,559,913. US Patent No. 3,706,848 shows an optical system for a camera in which a tiltable microscope objective is situated between the front objective and final microscope assembly. The front objective has a larger field of view than the final microscope assembly and the microscope objective can be tilted to allow the portion of the field of view of the front objective viewed by the final microscope assembly to be altered. This tilting of the microscope objective, moving it off the optical axes of the front objective and the final microscope assembly will introduce aberration into the final image, which is clearly undesirable.

German Patent Application No. 2,559,913 shows a gun sight in which a sighting telescope contains a swivel mounted compensating lens which is used to move the apparent position of the sighting reticule relative to the scene viewed through the sighting telescope. This is achieved by swivelling of the compensating lens moving the field of view of the telescope eyepiece across the field of view of the telescope object lens. This swivelling of the compensating lens will move it off the optical axes of the eyepiece and object lens and introduce aberration in the final image, which is again clearly undesirable.

This invention provides an optical device comprising a first optical assembly having an optical axis and having an aperture stop defining principal rays passing through its center, a second optical assembly having an optical axis, and guide means allowing relative movement between said two assemblies so that their respective optical axes are not coincident characterised in that said optical axis of said second assembly is always co-linear with one of said principal rays of said first assembly.

Preferably the first optical assembly comprises image producing means for producing an image and said second optical assembly comprises receiving means for receiving a selected portion of said image, and said guide means comprise an adjustment mechanism for adjusting the receiving means off the optical axis of said image producing means so as to select the said portion of the image such that said receiving means is mounted so that, at any of its positions of adjustment, its optical axis is co-linear with one of said principal rays of said image producing means

The principle of avoiding unacceptable aberrations by moving one optical system so that its axis remains co-linear with the principal rays of another optical system could be useful in other environments.

By employing the invention a gun sight can be built whose objective system (the "observation means") is designed to produce a larger than normal image; i.e. an image of a wider than normal field of view. In such a system the eye-piece is designed to view, at any one time, only a selected portion of the image but can be moved off-axis, to view other selected portions without interfering with the bore-sight of the gun. Furthermore, the gunner is able to adjust the eye-piece so that a feature of particular interest is located at the centre of the "selected portion" allowing it to be viewed with the minimum of aberration.

Also the objective lens, or other observation means, is designed so that the principal rays are normal to the image surface, thus allowing even focus across the complete field of view of the eye-piece or other observation device. The term "principal ray" is used in this specification in the sense as defined in the book "Modern Optical Engineering" by Warren J. Smith published by McGraw Hill Book Company page 124 i.e. as meaning "the ray through the centre of the aperture stop". The entrance and exit pupils of the system are the images of the aperture stop in object and image space respectively.

The invention is not exclusively applicable to gun sights or to systems using the human eye as a sensor. Instead of the human eye, an optical sensor, e.g. an infrared detector or array could be employed in which case the eye-piece could be replaced by an analogous optical observation means. There may be other systems in which it is desirable for an infra-red or visual photosensor to view just a part of a larger image and so the invention could find application in environments other than gun sights.

Conventional optical design practices would lead one to believe that by moving the eye-piece or other receiving device off-axis unacceptable aberrations would result. However the invention has realised that this problem can be overcome by affecting the adjustment in such a way that the optical axis of the receiving device is always co-linear with either the optical axis of the observation device or one of its principal rays. It will be understood that, for an optical system such as an eye-piece a change in stop, pupil, position will cause a change in aberrations in the system. By adopting principal rays as axial rays it is possible to move the eye-piece without moving the position of the pupils relative to the eye-piece.

One way in which the invention may be performed will now be described by way of example with reference to the accompanying drawings in which:
Fig. 1 shows, in very schematic form, a gun fitted with a gun sight constructed in accordance with the invention; and
Fig. 2 is a table of which the first eight surfaces define the optical characteristics of the objective lens system shown at 4 on Fig. 1 and surfaces 9 to 17 define the eye-piece.

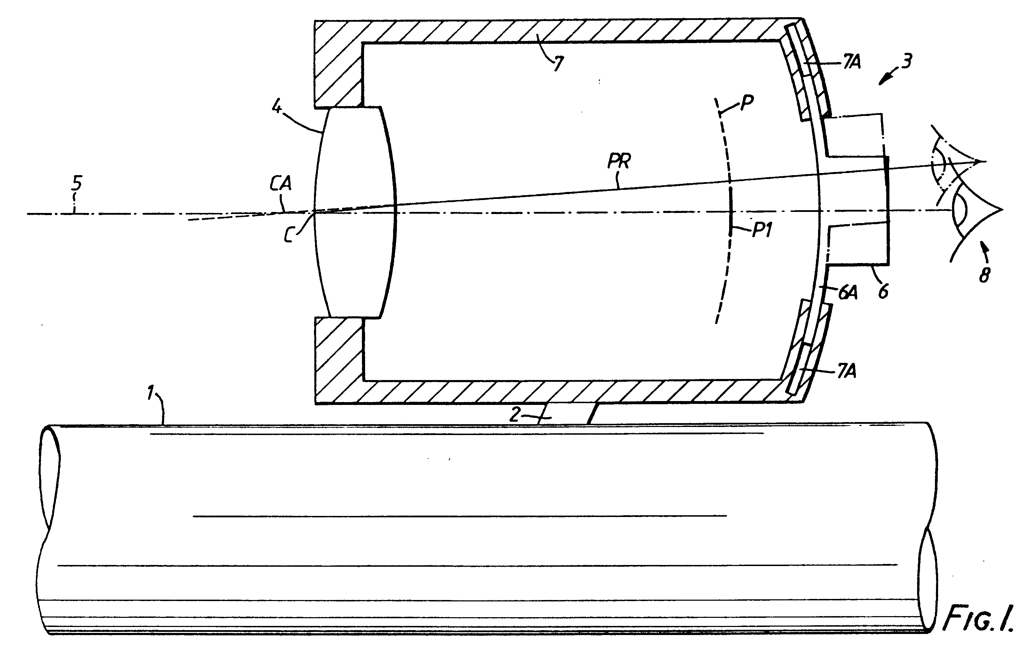

Referring to Fig. 1 of the drawings there is shown a gun 1 joined by a mechanical or electrical link 2 to a gun sight 3.

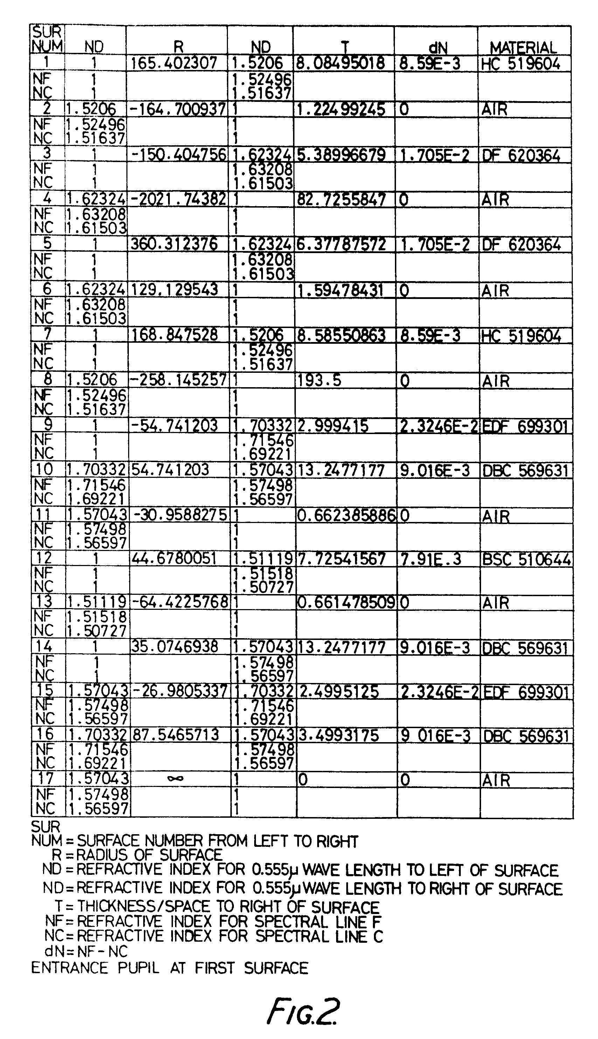

The gun sight 3 comprises an objective lens system 4 (forming the "observation means" of the invention). The objective lens system 4 has an optical axis 5 which is bore-sighted to the gun and its characteristics are as shown by surfaces 1 to 8 on Fig. 2.

The objective lens system 4 produces an image in an image surface P which is parabaloidal but, in the particular example illustrated, approximates to a spherical surface. In alternative designs the image surface could be plane or could be a distinct paraboloidal surface. An important feature of the design of the lens system 4 is that it defines principal rays, such as that shown at PR, which pass through the centre C of the entrance pupil (which in this case is the aperture stop defined by the casing 7) and appears to emerge from the virtual exit pupil CA. Each principal ray is normal to the image surface P.

An eye-piece 6 magnifies a portion P1 of the spherical image and presents it to a sensor 8 which, in this case, is a human eye. The gunner thus sees a portion of the field of view which contains a feature on which the gun is targeted. Other features, on which the gun is not currently targeted, can be viewed by adjusting the eye-piece. For this purpose the eye-piece has a flange 6A of part-spherical form which slides in a slot 7A of complimentary shape formed in part of a casing 7 of the gun sight. The arrangement of the flange 6A and slot 7A is such that, at all positions of the eye-piece 6 (e.g. the position indicated in broken lines), the optical axis of the eye-piece is aligned with a principal ray and is normal to the image surface P. Thus the eye-piece is at all times spaced by the same distance from the image surface P.

It is notable that the adjustment of the eye-piece can be affected without interference with the bore-sight of the gun. A graticule might be injected into the system in such a way as to match the spherical image. Alternatively a glass graticule might be used, which could be spherical or plane. Some facility for re-aligning the eye-piece with the axis of the objective might be needed. It would be possible to provide some form of detent mechanism for this purpose.

It will be appreciated that the system as illustrated is very much simplified for the purposes of description and that a practical system would include other features which are matters of routine design practice. For example, an erecting lens or prism system would be required to give an upright image and the system might also be periscopic. In extreme cases one might wish slightly to adjust the aperture stop to redefine the principal rays. In that case, the guiding mechanism for the eye-piece will be designed to take this into account and to ensure that the desired alignment of eye-piece-axis with principal rays is maintained.

## Claims

1. An optical device comprising a first optical assembly (4) having an optical axis (5) and having an aperture stop defining principal rays (PR) passing through its centre (c), a second optical assembly (6) having an optical axis, and guide means (6A,7A) allowing relative movement between said two assemblies so that their respective optical axes are not coincident, characterised in that said optical axis of said second assembly is always co-linear with one of said principal rays of said first assembly.

2. An optical device as claimed in claim 1 where said first optical assembly comprises image producing means (4) for producing an image and said second optical assembly comprises receiving means (6) for receiving a selected portion (P1) of said image, and said guide means comprise an adjustment mechanism (6A,7A) for adjusting the receiving means off the optical axis of said image producing means so as to select the said portion of the image such that said receiving means is mounted so that, at any of its positions of adjustment, its optical axis is co-linear with one of said principal rays of said image producing means.

3. An optical device according to claim 2 in which said observation means is designed so that each of its principal rays is normal to the image surface at the point where it intersects the latter.

4. An optical device according to claim 3 in which the image surface is flat.

5. An optical device according to claim 3 in which the image surface is curved.

6. An optical device according to claim 2 or claim 3 in which said receiving means is an eye-piece.

7. An optical device according to any preceding claim in which said adjustment mechanism is such as to cause the receiving means to follow the shape of the image surface.

8. A gun sight constructed according to any preceding claim.

## Patentansprüche

1. Eine optische Vorrichtung mit einem ersten optischen Aufbau (4), der eine optische Achse (5) und eine Aperturblende besitzt, welche Hauptstrahlen (PR) festlegt, die durch ihr Zentrum (C) laufen, einem zweiten optischen Aufbau (6), der eine optische Achse aufweist, und Führungsmitteln (6A, 7A), welche eine Relativbewegung zwischen den zwei Aufbauten erlauben, so daß ihre jeweiligen optischen Achsen nicht koinzident sind,
dadurch **gekennzeichnet,**
daß die optische Achse des zweiten Aufbaus immer kolinear mit einem der Hauptstrahlen des ersten Aufbaus ist.

2. Eine optische Vorrichtung nach Anspruch 1, worin der erste optische Aufbau bilderzeugende Mittel (4) zur Erzeugung eines Bildes und der zweite optische Aufbau ein Empfangsmittel (6) zum Empfang eines ausgewählten Teiles (P1) des Bildes umfaßt und die Führungsmittel einen Einstellungsmechanismus (6A, 7A) zur Einstellung des Empfangsmittels aus der optischen Achse der Bilderzeugungsmittel heraus umfassen, um den Bildteil auszuwählen, derart, daß das Empfangsmittel so angebracht ist, daß bei jeder seiner Einstellungspositionen seine optische Achse mit einem der Hauptstrahlen der Bilderzeugungsmittel kolinear ist.

3. Eine optische Vorrichtung nach Anspruch 2, in welcher das Beobachtungsmittel so konstruiert ist, daß jeder ihrer Hauptstrahlen normal zur Bildfläche an der Stelle ist, wo er sich mit letzterer schneidet.

4. Eine optische Vorrichtung nach Anspruch 3, in welcher die Bildfläche flach ist.

5. Eine optische Vorrichtung nach Anspruch 3, in welcher die Bildfläche gekrümmt ist.

6. Eine optische Vorrichtung nach Anspruch 2 oder 3, in welcher das Empfangsmittel ein Okular ist.

7. Eine optische Vorrichtung nach einem der vorhergehenden Ansprüche, in welcher der Einstellungsmechanismus derart ist, daß er das Empfangsmittel veranlaßt, der Gestalt der Bildfläche zu folgen.

8. Ein Gewehrvisier, das nach einem der vorhergehenden Ansprüche aufgebaut ist.

## Revendications

1. Dispositif optique comprenant un premier assemblage optique (4) présentant un axe optique (5) et présentant un arrêt d'ouverture définissant des rayons principaux (PR) traversant son centre (C), un second assemblage optique (6) présentant un axe optique, et un moyen de guidage (6A, 7A) permettant un déplacement relatif entre lesdits deux assemblages de telle sorte que leurs axes optiques respectifs ne coïncident pas, caractérisé en ce que ledit axe optique dudit second assemblage est toujours colinéaire par rapport à l'un desdits rayons principaux dudit premier assemblage.

2. Dispositif optique selon la revendication 1, dans lequel ledit premier assemblage optique comprend un moyen de production d'image (4) pour produire une image et ledit second assemblage optique comprend un moyen de réception (6) pour recevoir une partie sélectionnée (P1) de ladite image, et ledit moyen de guidage comprend un mécanisme de réglage (6A, 7A) pour régler le moyen de réception hors de l'axe optique dudit moyen de production d'image de manière à sélectionner ladite partie de l'image de telle sorte que ledit moyen de réception soit monté de manière à ce que, pour l'une quelconque de ses positions de réglage, son axe optique soit colinéaire par rapport à l'un desdits rayons principaux dudit moyen de production d'image.

3. Dispositif optique selon la revendication 2, dans lequel ledit moyen d'observation est conçu de telle sorte que chacun de ses rayons principaux soit perpendiculaire à la surface d'image au niveau du point où il intersecte cette dernière.

4. Dispositif optique selon la revendication 3, dans lequel la surface d'image est plane.

5. Dispositif optique selon la revendication 3, dans lequel la surface d'image est incurvée.

6. Dispositif optique selon la revendication 2 ou 3, dans lequel ledit moyen de réception est un oculaire.

7. Dispositif optique selon l'une quelconque des revendications précédentes, dans lequel ledit mécanisme de réglage est tel qu'il force le moyen de réception à suivre la forme de la surface d'image.

8. Viseur de canon construit selon l'une quelconque des revendications précédentes.
